# DEMANDE DE BREVET EUROPEEN

(11) **EP 3 842 006 A1**
(43) Date de publication de la demande: **30.06.2021**
(21) Numéro de dépôt: 19219931.3
(22) Date de dépôt: 27.12.2019
(51) Int. Cl.: A61C 8/00, A61C 13/265

(54) **DISPOSITIF DE FIXATION DE PROTHÈSES DENTAIRES SUR UN IMPLANT**

(71) Demandeur: Rodriguez Suire, Jean Philip, 07012 Palma de Mallorca - Baleares (ES); Rodriguez Moya, Sandrine, 28863 Madrid (ES)
(72) Inventeur: RODRIGUEZ, Roland, décédé(e) (ES)
(74) Mandataire: Touroude, Magali Linda

(57) **Abrégé**

L'invention concerne un dispositif de fixation de prothèse dentaire comprenant une tête d'assemblage (7 ; 7") et une coiffe (2 ; 2' ; 2" ; 2"') configurée pour être coopérer avec la tête (7 ; 7") suivant
- un tronçon d'extrémité (9) de la tête en forme de tronc sphérique coopérant avec un alésage de fond (14) de la coiffe de forme cylindrique, et
- un tronçon de base (8, 8") tronconique de la tête d'« angle » (a) aigu entre ses génératrice et son axe de symétrie (X), coopérant avec un alésage débouchant (13, 13") tronconique d'« angle » (b) correspondant inférieur à (a), fournissant un jeu de rattrapage des défauts d'alignement entre les axes de la coiffe et de la tête d'assemblage.

L'invention concerne en outre une tête, une coiffe et une méthode correspondantes.

## Description

L'invention concerne un dispositif de fixation de prothèses dentaires comprenant un attachement dentaire composé :
- d'un élément mâle comportant une embase sur laquelle s'étend une tête d'assemblage d'axe de symétrie longitudinal (X), sur laquelle est ménagée une rainure annulaire externe,
- d'une coiffe délimitant un logement de forme adaptée pour loger la tête d'assemblage, à l'intérieur duquel est ménagée une rainure annulaire interne,
- d'un anneau élastique fendu adapté pour se loger dans les rainures respectives de la tête d'assemblage et de la coiffe, en vue de réaliser une liaison entre les dites tête d'assemblage et coiffe.

De tels dispositifs de fixation, du type décrits dans les demandes de brevet US 4681542, US 2002/0177103, US 2015/0351877, et le brevet EP 244153 sont couramment utilisés à l'heure actuelle en vue de la pose de prothèses dentaires notamment en implantologie.

Une des difficultés majeures rencontrées lors de la mise en œuvre de cette technique de réalisation de prothèses dentaires réside dans la nécessité de faire coïncider les axes des coiffes solidaires des prothèses dentaires avec les axes des éléments mâles montés sur les ancrages, implants ou pivots.

Une parfaite coïncidence de ces axes est, en effet, difficile à obtenir du fait des divergences anatomiques existant entre les axes longitudinaux des racines dentaires auxquelles s'ajoutent les tolérances tors de la pose des ancrages, pivots ou implants.

Dans la pratique, ces défauts d'alignement conduisent à des difficultés de réalisation de prothèses dentaires parfaitement adaptées à l'anatomie du patient. De plus ces défauts d'alignement peuvent également entraîner des défauts de positionnement des anneaux élastiques se traduisant par des usures prématurées de ces derniers, voire l'annihilation de leur action.

Ces défauts d'alignement peuvent également conduire à des difficultés de retrait des prothèses dentaires, et leurs conséquences se trouvent, en outre, amplifiées lorsque les prothèses dentaires sont du type amovible.

Il est par ailleurs à noter que, même dans l'hypothèse, relativement rare, d'une absence de défaut d'alignement entre les axes des ancrages et des coiffes, des défauts d'alignement apparaissent, en implantologie, du fait des mouvements que subissent les ancrages implantés, les conséquences de ces défauts étant identiques à celles décrites ci-dessus.

Une autre particularité des systèmes de l'art antérieur est qu'il propose des prothèses scellées ou trans-vissées sur les implants des patients. En cas de problème sur la prothèse, si celle ci a été scellée, le descellement peut être délicat, difficile, voire impossible, et la prothèse risque fort d'être endommagée. Si elle a été trans-vissée, le dévissage est long et fastidieux, et donc onéreux.

La présente invention vise à pallier ces inconvénients et a pour objectif principal de fournir un dispositif de fixation de prothèses dentaires conçu pour permettre de rattraper sur 360 degrés les défauts d'alignement entre les axes des ancrages et les axes des coiffes, et d'annihiler les conséquences négatives de ces défauts d'alignement.

A cet effet, l'invention vise un dispositif de fixation de prothèses dentaires tel que défini dans les revendications, en particulier un dispositif comprenant un attachement dentaire du type décrit dans le préambule ci-dessus, et se caractérisant en ce que :
- la tête d'assemblage est composée, d'un seul tenant, de deux tronçons longitudinaux contigus comprenant :
   - un tronçon de base s'étendant sur l'embase, présentant la forme d'un tronc de cône délimité par une petite base circulaire, dite base supérieure, et une grande base, dite base inférieure, formée sur la dite embase, et dont les génératrices forment un angle prédéterminé (a) avec l'axe de symétrie (X),
   - un tronçon d'extrémité s'étendant dans le prolongement du tronçon de base, présentant la forme d'un tronc sphérique délimité par une face circulaire de jonction avec la base supérieure du dit tronçon de base, la dite face de jonction présentant un diamètre, d'une part, inférieur au diamètre maximal du dit tronçon d'extrémité, et d'autre part, au moins sensiblement égal au diamètre de supérieure du tronçon de base, de façon à former une rainure annulaire de forme non rétentive de blocage de l'anneau élastique,
- la coiffe, de longueur adaptée pour venir au contact de l'embase par son extrémité, délimite un logement interne composé de deux alésages longitudinaux contigus séparés par une rainure annulaire de forme rétentive, de blocage de l'anneau élastique, et comprenant :
   - un alésage de fond cylindrique de longueur adaptée pour loger le tronçon d'extrémité de b tête d'assemblage, présentant un diamètre conjugué du diamètre maximal du dit tronçon d'extrémité,
   - un alésage débouchant présentant la forme d'un tronc de cône dont la petite base est formée au niveau de la liaison du dit alésage débouchant avec l'alésage de fond, et dont les génératrices forment, avec l'axe de symétrie (X), un angle prédéterminé (b)<(a).

Les deux éléments, tête d'assemblage et coiffe, du dispositif de fixation de prothèses dentaires selon l'invention combinent donc :
- un tronçon cylindrique coopérant avec un alésage cylindrique,
- un tronçon tronconique d'« angle » (a) coopérant avec un alésage tronconique d'« angle » (b) < (a), fournissant un jeu de rattrapage sur 360 ° des défauts d'alignement entre les axes des coiffes et des têtes d'assemblage,
- des rainures ménagées à la base, respectivement du tronçon sphérique et de l'alésage cylindrique, de verrouillage d'un anneau élastique.

Une telle combinaison de caractéristiques s'avère, dans la pratique :
- permettre, malgré les divergences anatomiques, de présenter les coiffes en regard des têtes d'assemblage, puis de faire coulisser les dites coiffes le long des dites têtes d'assemblage jusqu'à obtenir le verrouillage des anneaux élastiques,
- garantir, une fois ce verrouillage obtenu et malgré la présence du jeu de rattrapage, un parfait blocage relatif des coiffes et des têtes d'assemblage, du fait :
   - des contacts établis entre ces deux éléments, notamment : entre la coiffe et l'embase, et entre les faces latérales et frontales en regard du tronçon sphérique de la tête d'assemblage et de l'alésage cylindrique de la coiffe,
   - du positionnement de l'anneau élastique dans la rainure de blocage située à la base du tronçon sphérique de la tête d'assemblage,
- permettre le retrait aisé des prothèses sans risque de détérioration des anneaux élastiques, notamment lorsque ces prothèses sont du type amovible et donc destinées à être retirées et remises en place avec une fréquence au moins quotidienne.

En outre, les inconvénients de dévissage ou le descellement sont évitées. En effet, pour les prothèses dites fixées, ce système ne nécessitant ni scellement ni trans-vissage. La dépose est assez facile et rapide donc gain de temps très appréciable. La prothèse peut être déposée facilement sans l'abimer.

Selon un mode de réalisation avantageux de l'invention, le tronçon de base de la tête d'assemblage présente la forme d'un tronc de cône dont les génératrices forment un angle prédéterminé (a) au moins sensiblement de l'ordre de 15° avec l'axe de symétrie (X), et l'alésage débouchant de la coiffe présente la forme d'un tronc de cône dont les génératrices forment un angle prédéterminé (b) sensiblement inférieur d'une valeur de 1° à 3° par rapport à l'angle (a).

Selon on autre mode de réalisation avantageux de l'invention visant à réduire l'encombrement en hauteur du dispositif de fixation, le tronçon d'extrémité de la tête d'assemblage est délimité par la face circulaire de jonction avec la base supérieure du tronçon de base, et par une face circulaire, dite face supérieure, de diamètre inférieur au diamètre maximal du dit tronçon d'extrémité.

De plus, lorsque les ancrages consistent en des implants dentaires, et de façon avantageuse selon l'invention, le tronçon d'extrémité de la tête d'assemblage comporte une empreinte creuse ménagée dans sa face supérieure, de section conjuguée de celle d'un outil de vissage sur un implant dentaire.

Selon un autre mode de réalisation avantageux de l'invention, et à des fins de limitation de l'encombrement transversal de la tête d'assemblage, la base inférieure du tronçon de cette tête d'assemblage présente un diamètre sensiblement supérieur au diamètre maximal du tronçon d'extrémité de la dite tête d'assemblage.

Par ailleurs, principalement lorsque le dispositif de fixation est utilisé en vue de la mise en place d'une dent unitaire ou d'un bridge, la tête d'assemblage comporte avantageusement une seconde rainure annulaire de forme non rétentive de blocage d'un second anneau élastique, ménagée sur le tronçon de base, et la coiffe comporte également une seconde rainure de forme rétentive de blocage du dit second anneau élastique, ménagée dans l'alésage débouchant.

Ce second anneau fonction d'assurer le verrouillage des deux éléments, coiffe et tête d'assemblage, lorsque la prothèse dentaire, dent unitaire ou bridge, est susceptible d'être soumise à un effort de basculement.

Selon un autre mode de réalisation avantageux de l'invention visant à fournir une possibilité supplémentaire de rattrapage des divergences anatomiques, la coiffe présente extérieurement la forme d'une calotte sphérique adaptée pour former la portée sphérique d'une rotule composée de cette coiffe et d'une capsule sphérique ajustée sur la dite coiffe et adaptée pour être scellée dans une prothèse dentaire.

Selon un autre mode de réalisation avantageux de l'invention, la coiffe est réalisée en un matériau présentant des qualités de résilience, notamment du polyétheréthercétone médical ou « PEEK MÉDICAL », encapsulé dans une chape adaptée pour être scellée dans une prothèse dentaire.

Une telle coiffe s'avère susceptible d'absorber les chocs auxquels est soumise la transmission de ces chocs à l'implant et donc à la mâchoire de la personne équipée de cette prothèse.

D'autres caractéristiques buts et avantages de l'invention ressortiront de la description détaillée qui suit en référence aux dessins annexés qui en représentent, à titres d'exemples non limitatifs, cinq modes de réalisation préférentiels. Sur ces dessins :
- la figure la est une vue en perspective d'un élément mâle d'un premier mode de réalisation de dispositif de fixation conforme à l'invention,
- la figure 1b est une vue en perspective de la coiffe de ce premier mode de réalisation de dispositif de fixation,
- la figure 2a est une coupe longitudinale axiale de l'élément mâle de ce premier mode de réalisation de dispositif de fixation,
- la figure 2b est une vue en coupe longitudinale axiale de la coiffe de ce premier mode de réalisation de dispositif de fixation,
- la figure 3 est une coupe longitudinale axiale de ce premier mode de réalisation de dispositif de fixation composé de l'élément mâle et de la coiffe représentés aux figures la à 2b,
- la figure 4 est une vue en perspective d'un anneau élastique équipant les dispositifs de fixation selon l'invention,
- la figure 5 est une coupe longitudinale axiale partielle d'un deuxième mode de réalisation de dispositif de fixation conforme à l'invention,
- la figure 6 est une coupe longitudinale axiale partielle d'un troisième mode de réalisation de dispositif de fixation conforme à l'invention,
- la figure 7 est une coupe longitudinale axiale partielle d'un quatrième mode de réalisation de dispositif de fixation conforme à l'invention,
- et la figure 8 est une vue longitudinale d'une variante d'élément mâle pour un dispositif de fixation conforme à l'invention.

(A des fins de simplification de la description détaillée qui suit, les éléments identiques et de même fonction des différents modes de réalisation décrits ci-dessous peuvent être répertoriés avec la même référence numérique. Les éléments de ces différents modes de réalisation de même fonction mais de structures différentes peuvent être quant à eux répertoriés avec la même référence numérique à laquelle sont accolés respectivement les symboles « 1 », « " », «"'» pour les deuxième, troisième et quatrième modes de réalisation.)

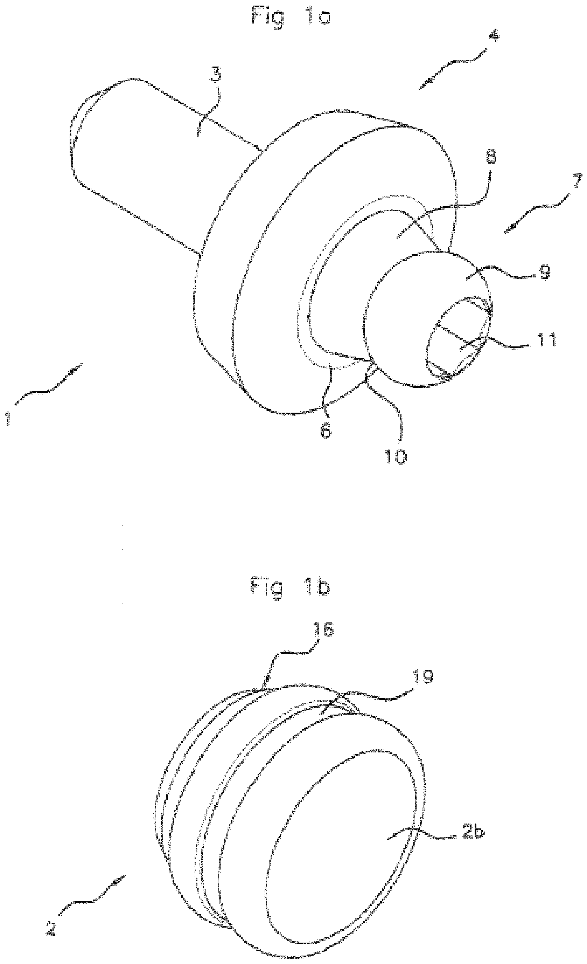

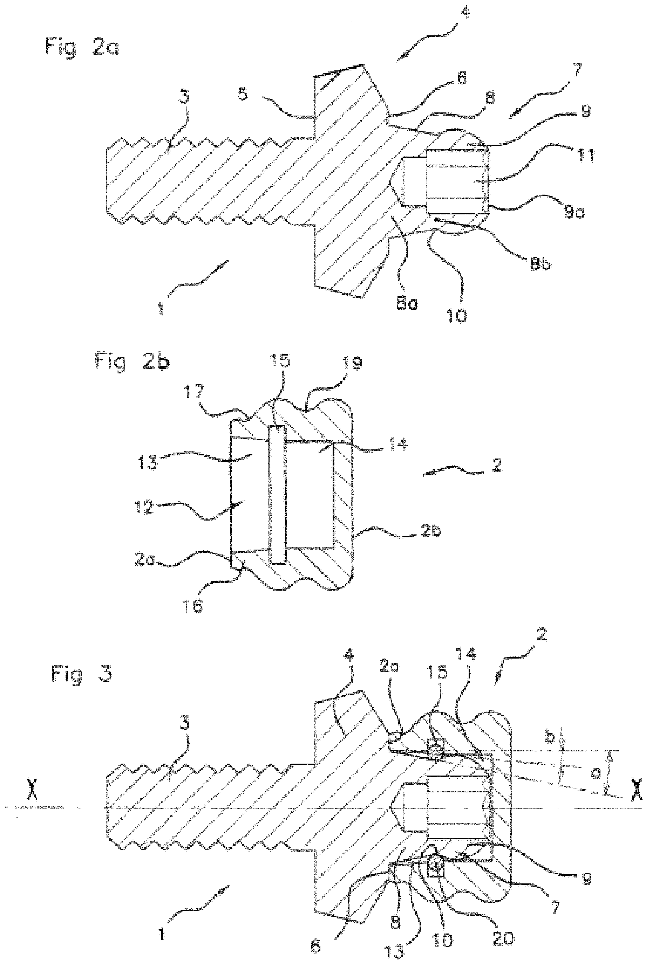

Le dispositif de fixation représenté aux figures 1 à 3 est particulièrement utilisé en vue de la pose de prothèses dentaires en implantologie, et se compose d'un élément mâle 1 et d'une coiffe 2.

En premier lieu, l'élément mâle 1 de ce dispositif de fixation comporte une tige filetée 3 pour la fixation par vissage de cet élément mâle sur l'implant.

Cet élément mâle comporte, en outre, une embase 4 délimitée par une face plane circulaire 5, dite inférieure, par laquelle s'étend axialement en saillie la tige filetée 3, et une face circulaire opposée 6, dite supérieure, de diamètre réduit par rapport à la face inférieure 5.

A titre d'exemple, la face inférieure 5 présente un diamètre de l'ordre de 4,5 mm tandis que le diamètre de la face supérieure 6 est de l'ordre de 3 mm.

Cet élément mâle 1 comporte également une tête d'assemblage 7 s'étendant axialement en saillie par rapport à la face supérieure de l'embase 4 et se composant, d'un seul tenant, de deux tronçons longitudinaux contigus comprenant:
- un tronçon de base 8 s'étendant sur la face supérieure 6 de l'embase 4, présentant la forme d'un tronc de cône délimité par une petite base circulaire 8b, dite base supérieure, d'un diamètre de l'ordre de 2,0 mm, et une grande base 8a, dite base inférieure, formée sur la dite embase, et dont les génératrices forment un angle prédéterminé (a) de l'ordre de 15° avec l'axe de symétrie (X) de l'élément mâle 1,
- un tronçon d'extrémité 9 s'étendant dans le prolongement du tronçon de base 8, présentant la forme d'un tronc sphérique délimité par :
   - une face circulaire de jonction avec la base supérieure 8b du tronçon de base, la dite face de jonction présentant un diamètre, d'une part, inférieur au diamètre maximal du dit tronçon d'extrémité sensiblement égal a 2.2 mm, et d'autre part, sensiblement égal au diamètre de la dite base supérieure du tronçon de base 8, de façon à former une rainure annulaire 10 de forme non rétentive de blocage d'un anneau élastique 20,
   - une face circulaire d'extrémité 9a d'un diamètre de l'ordre de 1,5 mm, dans laquelle est ménagée axialement une empreinte creuse 11 adaptée pour loger un outil de vissage de l'élément mâle 1 sur l'implant.

La coiffe 2 consiste en une coiffe présentant extérieurement une forme sensiblement cylindrique comprenant, d'une part, d'une paroi de forme globale cylindrique d'une longueur de l'ordre de 2,5 mm, adaptée pour que la face d'extrémité 2a de la dite paroi latérale vienne au contact de la face supérieure 8 de l'embase 4 lorsque la dite coiffe loge la tête d'assemblage 7, et d'autre part, d'une paroi de fond circulaire 2b d'un diamètre de 4mm.

Cette coiffe 2 délimite, en outre, un logement interne composé de deux alésages longitudinaux contigus 13, 14, séparés par une rainure annulaire le forme rétentive, de blocage d'un anneau élastique 20, et comprenant :
- un alésage de fond cylindrique 14 jouxtant la paroi de fond 2b, de longueur adaptée pour loger le tronçon d'extrémité 9 de la tête d'assemblage 1, présentant un diamètre conjugué du diamètre maximal du dit tronçon d'extrémité,
- un alésage débouchant 13 présentant la forme d'un tronc de cône dont la petite base est formée au niveau de la liaison du dit alésage débouchant avec l'alésage et dont les génératrices forment, avec l'axe un angle prédéterminé (b) sensiblement inférieur d'une valeur de 1° à 3° par rapport à l'angle (a).

En outre concernant cette coiffe 2, une rainure annulaire est ménagée dans la face externe de la paroi latérale 16, et cette paroi latérale 16 comporte une portion d'extrémité 17 de moindre épaisseur, ces deux dépressions 17, 19 constituant des logements pour la résine de scellement dans la prothèse dentaire.

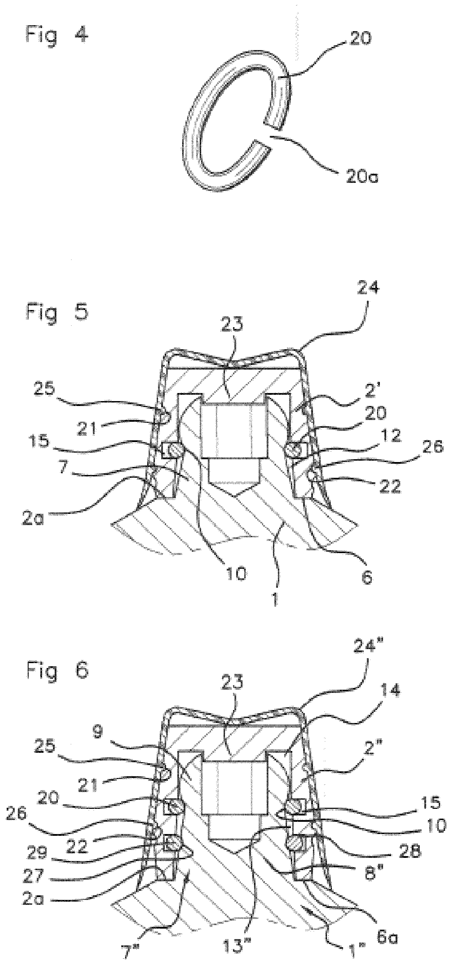

Tel que représenté à la figure 4, l'anneau élastique destiné à être associé à ce dispositif de fixation comprend en un anneau 20 réalisé en un matériau à mémoire de forme, interrompu par une fente 20a.

Le deuxième mode de réalisation de dispositif de fixation selon l'invention représenté à la figure 5 est particulièrement destiné à être utilisé en vue de la pose de dents unitaires ou de bridges.

Ce dispositif de fixation comporte, en premier lieu, un élément mâle 1 de préférence identique à celui décrit ci-dessus.

La coiffe 2' de ce dispositif de fixation présente une forme identique à celle de la coiffe 2 ci-dessus décrite, et délimite un logement interne 12 composé de deux alésages longitudinaux contigus 13, 14 séparés par une rainure annulaire 15 de forme rétentive, également de préférence identiques à ceux décrits ci-dessus.

La principale différence de cette coiffe réside dans le fait qu'elle est réalisée en un matériau présentant des qualités de résilience, et par conséquent susceptible d'absorber les chocs auxquels est soumise la prothèse la transmission de ces chocs à l'implant et donc à la mâchoire de la personne équipée de cette prothèse. Le matériau utilisé pour réaliser cette coiffe 2' peut comprendre du polyétheréthercétone médical ou « PEEK MÉDICAL ».

Cette coiffe 2' se différencie également en ce qu'elle intègre, dans le fond du logement 12, une empreinte 23 en relief par rapport à la paroi de fond de la dite coiffe. Cette empreinte en relief 23 présente une forme conjuguée de celte de l'empreinte creuse 11 ménagée dans la face circulaire d'extrémité 9a de la tête d'assemblage, et elle est positionnée de façon à se loger dans la dite empreinte creuse en vue de permettre une indexation en rotation de la coiffe 2'.

Cette coiffe se différencie en outre en ce que la face externe de la paroi latérale de la dite coiffe est dépourvue de dépressions 17 et 19, et comporte, en lieu et place de ces dernières, deux rainures annulaires 21, 22 sensiblement réparties sur la longueur de cette face externe.

La seconde différence majeure de cette coiffe 2' inclut la présence d'une capsule 24 en un matériau calcinable destinée au scellement dans la prothèse, adaptée pour s'ajuster parfaitement sur la coiffe 2', et présentant notamment, à cet effet, deux nervures annulaires 25, 26 conjuguées des rainures 21, 22 de la dite coiffe.

Le troisième mode de réalisation de dispositif de fixation selon l'invention représenté à la figure 6 est également particulièrement destiné à être utilisé en vue de la pose de dents unitaires ou de bridges, et vise de telles dents unitaires ou bridges susceptibles d'être soumis à des forces de basculement.

Ce dispositif de fixation est donc conçu pour permettre de garantir le maintien en place de la prothèse dentaire lorsque cette dernière est soumise à de tels efforts de basculement et, à cet effet :
- l'élément mâle 1" comporte une tête d'assemblage 7" dont le tronçon de base 8" présente une longueur supérieure, par exemple de l'ordre de 2 mm par rapport à celle des tronçons de base 8 des dispositifs de fixation ci-dessus décrits, de façon à ménager sensiblement à mi-longueur du dit tronçon de base, une seconde rainure annulaire 27 non rétentive,
- la paroi latérale de la coiffe 2" présente également une longueur supérieure à celle de la paroi latérale des coiffes ci-dessus décrites, de façon à ménager dans le logement 13" une seconde rainure annulaire 28 de forme rétentive,
- un second anneau élastique 20 est positionné dans les rainures 27, 28,

Selon ce principe, le premier anneau élastique 20 assure le blocage de la coiffe 2", tandis que le second anneau élastique 29 assure le verrouillage de cette coiffe 2".

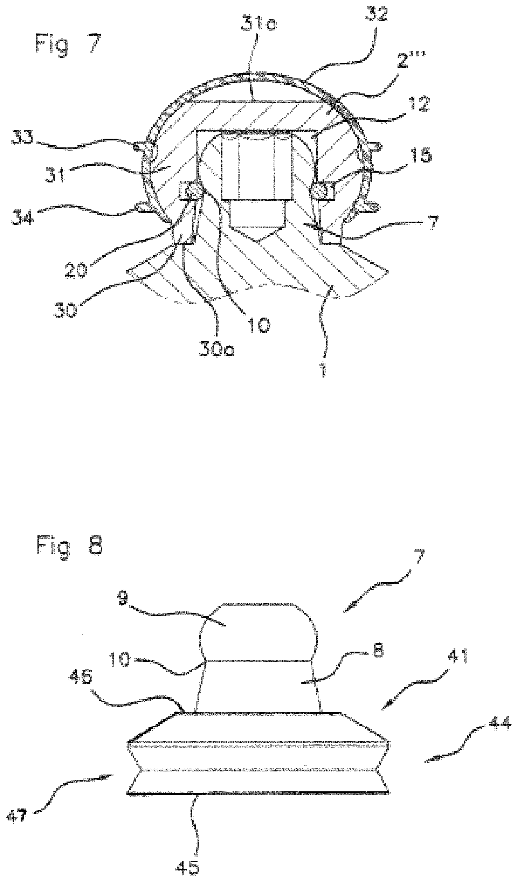

Le quatrième mode de réalisation de dispositif de fixation selon l'invention représenté à la figure 7 est particulièrement destiné à être utilisé :
- associé à un implant positionné dans des zones où le mandibule présente une faible largeur, requérant l'utilisation d'implants de section réduite et donc moins résistants,
- et/ou pour des prothèses remplaçant des dents dont les racines présentent des divergences anatomiques importantes.

A titre d'exemple, ce dispositif vise ainsi notamment les implants positionnés au niveau des canines 33 et 43 et/ou les prothèses remplaçant notamment ces canines.

Selon ce mode de réalisation, l'élément mâle peut être identique à celui décrit ci-dessus en référence aux figures 1 à 5.

La coiffe 2"' délimite quant à elle un logement interne 12 pouvant être identique à ceux décrits ci-dessus en référence aux figures 1 à 5, mais se différencie de ces derniers par sa forme externe de calotte sphérique 31, d'une part, tronquée en partie supérieure de façon à comporter une face supérieure plane circulaire 31a, et d'autre part prolongée en partie inférieure par un tronçon annulaire 30 de butée sur l'embase 4 par son extrémité 30a.

Cette coiffe 2"' forme ainsi une portée sphérique sur laquelle est ajustée une capsule sphérique métallique 32 adaptée pour être scellée dans une prothèse dentaire et présentant notamment, à cet effet, deux nervures annulaires externes de rétention 33, 34.

Selon ce mode de réalisation, la coiffe 2'" forme donc la portée sphérique d'une rotule composée de cette coiffe et de la capsule sphérique 32, dont la fonction est de fournir une possibilité supplémentaire de rattrapage des divergences anatomiques.

Il est à noter que selon ce mode de réalisation, la coiffe 2"' peut consister soit en une coiffe métallique, soit en une coiffe en un matériau présentant des qualités de résilience, tel que le polyétheréthercétone médical ou « PEEK MÉDICAL ». Dans ce second cas, la coiffe peut être encapsulée dans une chape sphérique métallique (non représentée), afin de permettre le glissement relatif des faces en contact de la rotule.

Le dernier mode de réalisation représenté à la figure 8 est un élément mâle 41 dont l'embase 44, notamment adaptée pour être incorporée sur une dent à pivot, est délimitée par une face inférieure 45 et une face supérieure 46, en métal (titane,..) soit en matériau calcinable.

En vue de son incorporation éventuelle dans une coulée, cet élément mâle 41 présente, en outre, notamment la particularité de présenter une embase 44 dans laquelle est ménagée une rainure annulaire 47 en l'exemple présentant une section en forme de V.

## Revendications

1. Dispositif de fixation de prothèse dentaire comprenant une tête d'assemblage (7 ; 7") et une coiffe (2 ; 2' ; 2" ; 2"') configurée pour être coopérer avec la tête (7 ; 7") suivant
- un tronçon d'extrémité (9) de la tête en forme de tronc sphérique coopérant avec un alésage de fond (14) de la coiffe de forme cylindrique, et
- un tronçon de base (8, 8") tronconique de la tête d'« angle » (a) aigu entre ses génératrice et son axe de symétrie (X), coopérant avec un alésage débouchant (13, 13") tronconique d'« angle » (b) correspondant inférieur à (a), fournissant un jeu de rattrapage des défauts d'alignement entre les axes de la coiffe et de la tête d'assemblage.

2. Dispositif de fixation selon la revendication précédente, comprenant en outre des rainures externe (10) et interne (15) ménagées à la base, respectivement du tronçon (9) en tronc de sphère et de l'alésage cylindrique (14), de verrouillage d'un anneau élastique (20).

3. Dispositif de fixation de prothèse dentaire comprenant un attachement dentaire composé :
- d'un élément mâle (1 ; 1" ; 41) comportant une embase (4 ; 44) sur laquelle s'étend une tête d'assemblage (7 ; 7") d'axe de symétrie longitudinal (X), sur laquelle est ménagée une rainure annulaire externe (10),
- d'une coiffe (2 ; 2' ; 2" ; 2"') délimitant un logement (12) de forme de forme adaptée pour loger la tête d'assemblage (7 ; 7"), à l'intérieur duquel est ménagée une rainure annulaire interne (15),
- d'un anneau élastique fendu (20) adapté pour se loger dans les rainures (10, 15) respectives de la tête d'assemblage (7 ; 7") et de la coiffe (2 ; 2' ; 2" ; 2"'), en vue de réaliser une liaison entre les dites tête d'assemblage et coiffe,
le dit dispositif de fixation étant **caractérisé en ce que** :
- la tête d'assemblage (7 ; 7") est composée, d'un seul tenant, de deux tronçons longitudinaux contigus comprenant :
• un tronçon de base (8, 8") s'étendant sur l'embase (4, 44) présentant la forme d'un tronc de cône délimité pars une petite base circulaire (8b), dite base supérieure, et formée sur la dite embase, et dont les génératrices forment un angle prédéterminé (a) avec l'axe de symétrie (X),
• un tronçon d'extrémité (9) s'étendant dans le prolongement du tronçon de base (8 ; 8"), présentant la forme d'un tronc sphérique délimité par une face circulaire de jonction avec la base supérieure (8b) du dit tronçon de base, la dite jonction présentant un diamètre, d'une part, inférieur au diamètre maximal du dit tronçon d'extrémité, et d'autre part, au moins sensiblement égal au diamètre de la base supérieure (8b) du tronçon de base, (8 ; 8"), de façon à former une rainure annulaire (10) de forme non rétentive de blocage de l'anneau élastique (20),
- la coiffe (2 ; 2' ; 2" ; 2"'), de longueur adaptée pour venir au contact de l'embase (4 ; 44) par son extrémité (2a ; 30a), délimite un logement interne (12) composé de deux alésages longitudinaux contigus séparés par une rainure annulaire (20) de forme rétentive, de blocage de l'anneau élastique (20), et comprenant en :
• un alésage de fond cylindrique (14) de longueur adaptée pour loger le tronçon d'extrémité (9) de la tête d'assemblage (7 ; 7") présentant un diamètre conjugué au diamètre maximal du dit tronçon d'extrémité,
• un alésage débouchant (13 ; 13") présentant la forme d'un tronc de cône dont la petite base est formée au niveau de la liaison du dit alésage débouchant avec l'alésage de fond (14), et dont les génératrices forment, avec l'axe de symétrie (X), un angle prédéterminé (b)<(a).

4. Dispositif de fixation selon l'une des revendications précédentes, **caractérisé en ce que** le tronçon de base (8) de la tête d'assemblage (7) présente la forme d'un tronc de cône dont les génératrices forment un angle prédéterminé (a) au moins sensiblement de l'ordre de 15°, avec l'axe de symétrie (X), et l'alésage débouchant (13) de la coiffe (2 ; 2' ; 2"') présente la forme d'un tronc de cône dont les génératrices forment un angle prédéterminé (b) sensiblement inférieur d'une valeur de 1° à 3° par rapport à l'angle (a).

5. Dispositif de fixation selon l'une des revendications précédentes, **caractérisé en ce que** le tronçon d'extrémité (9) de la tête d'assemblage (7) est délimité par la face circulaire de jonction avec la base supérieure (8b du tronçon de base (8), et par une face circulaire (9a), dite face supérieure, de diamètre inférieur au diamètre maximal du dit tronçon d'extrémité.

6. Dispositif de fixation selon la revendication précédente, **caractérisé en ce que** le tronçon d'extrémité (9) de la tête d'assemblage (7) comporte une empreinte creuse (11) ménage dans sa face supérieure (9a), de section conjuguée de celle d'un outil de vissage sur un implant dentaire.

7. Dispositif de fixation selon l'une des revendications précédentes, **caractérisé en ce que** la base inférieure (8a) du tronçon de base (8) de la tête d'assemblage (7) présente un diamètre sensiblement supérieur au diamètre maximal du tronçon d'extrémité (9) de la dite tête d'assemblage.

8. Dispositif de fixation selon l'une des revendications précédentes, **caractérisé en ce que** la tête d'assemblage (7") comporte une seconde rainure annulaire (27) de forme non rétentive de blocage d'un second anneau élastique (29), ménagée sur le tronçon de base (8"), la coiffe (2") comportant une seconde rainure de forme rétentive (28) de blocage du dit second anneau élastique, ménagée dans l'alésage débouchant (13").

9. Dispositif de fixation selon l'une des revendications précédentes, **caractérisé en ce que** la coiffe (2"') présente extérieurement la forme d'une calotte sphérique (31) adaptée pour former la portée sphérique d'une rotule composée de cette coiffe (2"') et d'une capsule sphérique (32) ajustée sur ladite coiffe et adaptée pour être scellée dans une prothèse dentaire.

10. Dispositif de fixation selon l'une des revendications précédentes, **caractérisé en ce que** la coiffe (2' ; 2") est réalisée en un matériau présentant des qualités de résilience, notamment du polyétheréthercétone médical ou « PEEK MEDICAL » encapsulé dans une chape (24 ; 24") adaptée pour être scellée dans une prothèse dentaire.

11. Tête d'assemblage d'un dispositif de fixation selon l'une des revendications précédentes.

12. Coiffe d'un dispositif de fixation selon l'une des revendications 1 à 10.

13. Méthode de fixation de prothèse dentaire **caractérisée par** la mise en œuvre d'un dispositif de fixation selon l'une des revendications 1 à 10, ou d'une tête de fixation selon la revendication 11 et/ou d'une coiffe selon la revendication 12.
